Europäisches Patentamt

European Patent Office

Office européen des brevets

(11) Veröffentlichungsnummer: **0 469 339 A2**

## EUROPÄISCHE PATENTANMELDUNG

(21) Anmeldenummer: **91111298.5**

(22) Anmeldetag: **06.07.91**

(51) Int. Cl.5: **C08G 12/42**, C08G 12/16, C08L 61/32, D06M 15/433

(30) Priorität: **02.08.90 DE 4024473**

(43) Veröffentlichungstag der Anmeldung: **05.02.92 Patentblatt 92/06**

(84) Benannte Vertragsstaaten: **AT BE CH DE DK ES FR GB IT LI NL SE**

(71) Anmelder: **Pfersee Chemie GmbH Rehlinger Str. 1 Postfach 1153 W-8901 Langweid am Lech(DE)**

(72) Erfinder: **Braun, Reinhold Angerstrasse 1 W-8930 Schwabmünchen(DE)**
Erfinder: **Dermeik, Salman, Dr. Droste-Hülshoff-Strasse 9 W-8900 Augsburg(DE)**
Erfinder: **Lemmer, Karl-Heinz Bärenstrasse 17 W-8900 Augsburg(DE)**
Erfinder: **Mangold, Rudolf Eichenstrasse 6 W-8901 Adelsried(DE)**
Erfinder: **Kästele, Xaver Egerstrasse 8b W-8902 Neusäss(DE)**

(54) **Wässrige Lösungen von veretherten Dicyandiamid-Formaldehyd-Umsetzungsprodukten.**

(57) Wäßrige Lösungen von Umsetzungsprodukten von Dicyandiamid mit Formaldehyd, deren N-Methylolgruppen zu mindestens 30 % verethert sind, weisen eine bessere Lagerstabilität und Wasserverdünnbarkeit auf als entsprechende Lösungen von Umsetzungsprodukten, die ausschließlich nicht-veretherte N-Methylolgruppen enthalten. Die Lösungen besitzen einen pH-Wert von 4,5 bis 8,5 und enthalten zusätzlich eine Säure und/oder deren Salz.

Die Lösungen sind, gegebenenfalls nach Verdünnen oder Abmischen mit anderen Lösungen, zur Flammfestausrüstung von Fasermaterial, insbesondere cellulosischem Material, geeignet.

Die Erfindung bezieht sich auf eine wäßrige Lösung eines pH-Wert von 4,5 bis 8,5 bei 20°C, enthaltend

a) ein Produkt, das bei der Umsetzung von Dicyandiamid (DCDA) mit Formaldehyd im Molverhältnis von 1:1 bis 1:2,5 bei einem pH-Wert von 5,0 bis 10,0 und bei einer Temperatur von weniger als 80°C entsteht und dessen N-Methylolgruppen zu mindestens 30% mit einem gesättigten aliphatischen Alkohol mit 1 bis 4 C-Atomen verethert sind

b) eine, gegebenenfalls teilweise oder vollständig neutralisierte, Säure S).

Sie bezieht sich ferner auf ein Verfahren zur Herstellung und auf die Verwendung solcher Lösungen.

Es ist bekannt, wäßrige Lösungen, welche ein Umsetzungsprodukt von Dicyandiamid (DCDA) mit Formaldehyd und Phosphorsäure enthalten, für die Flammschutzausrüstung von Fasermaterialien zu verwenden. Dies geht beispielsweise hervor aus US-PS 2 582 961, AT-PS 190 270 und US-PS 3 887 511. Der Nachteil der dort beschriebenen wäßrigen Lösungen besteht darin, daß sie, selbst wenn sie unmittelbar nach ihrer Herstellung wasserverdünnbar sind, diese Eigenschaft der Wasserverdünnbarkeit nach einer relativ kurzen Standzeit verlieren. Beim Zusatz von Wasser treten dann Ausfällungen auf und die Produkte sind nicht mehr verwendbar. Es ist ein großer Vorteil, wenn wäßrige Lösungen, welche ein Umsetzungsprodukt aus DCDA und Formaldehyd enthalten, auch nach längerer Lagerzeit noch beliebig wasserverdünnbar sind. Denn zum einen kann dann der Hersteller solcher Lösungen die Produkte in relativ konzentrierter Form ausliefern und so Transportkosten sparen, während der Anwender die Lösungen nur noch auf Gebrauchskonzentration verdünnen muß. Zum anderen kann es für Anwendungszwecke erwünscht sein, diesen Lösungen wäßrige Lösungen oder Dispersionen anderer Faserausrüstungsprodukte vor der Anwendung beizumischen. Damit dies möglich ist, müssen die Lösungen, welche ein DCDA/Formaldehyd-Umsetzungsprodukt enthalten, wasserverdünnbar sein.

Das Problem der begrenzten Lagerzeit bzw. der Wasserverdünnbarkeit nach längerer Lagerung ließe sich prinzipiell zwar durch Erhöhung der Menge an Phosphorsäure lösen, jedoch sind hierfür solch hohe Mengen an Phosphorsäure erforderlich, daß eine Schädigung des Fasermaterials auftreten kann, wenn man es mit diesen Lösungen behandelt. Dies gilt insbesondere für cellulosische Fasermaterialien.

Nach der Lehre der US-PS 4 073 617 wurde versucht, das Problem der mangelnden Wasserverdünnbarkeit dadurch zu lösen, daß man vor dem Verdünnen mit Wasser weitere Phosphorsäure zugab. Diese zusätzliche Phosphorsäure muß weniger als 8 Stunden vor der Verdünnung zugegeben werden. Damit bleibt es im Normalfall dem Anwender überlassen, diese zusätzliche Phosphorsäure beizumischen, wenn ihm nicht stark verdünnte Lösungen geliefert werden sollen, was zu erhöhten Transportkosten führen würde. Wünschenswert wäre dagegen, konzentriertere Lösungen liefern zu können, die vom Anwender ohne vorhergehenden Phosphorsäurezusatz mit Wasser verdünnt werden können.

Das Verfahren der US-PS 4 073 617 weist noch einen weiteren Nachteil auf: Die in wäßriger phosphorsaurer Lösung vorliegenden DCDA/Formaldehyd-Umsetzungsprodukte dieser US-PS enthalten keine veretherten N-Methylolgruppen. Diese Produkte gehen leichter als veretherte Produkte Kondensationsreaktionen ein, die zu Substanzen führen, die bei neutralem oder schwach saurem pH-Wert nicht in Lösung gehalten werden können. Aus diesem Grund muß auch vor dem Verdünnen nach Lagerung eine starke Säure, nämlich Phosphorsäure zugegeben werden. Die Anwesenheit einer starken Säure bzw. das Vorliegen eines niedrigen pH-Werts kann in bestimmten Fällen zu Faserschädigung führen.

Der vorliegenden Erfindung lag daher die Aufgabe zugrunde, wäßrige Lösungen auf Basis von Umsetzungsprodukten von Dicyandiamid mit Formaldehyd zur Verfügung zu stellen, welche auch nach mehrmonatiger Lagerung beliebig stark mit reinem Wasser, d.h. ohne Säurezusatz verdünnt werden können und nach dieser Verdünnung als klare, homogene Lösungen vorliegen.

Die Aufgabe wurde gelöst durch eine wäßrige Lösung gemäß Anspruch 1. Das Produkt, das durch Umsetzung von DCDA mit Formaldehyd unter den in Anspruch 1 genannten pH-Wert- und Temperaturbedingungen erhalten wird, ist in den erfindungsgemäßen Lösungen so modifiziert, daß mindestens 30 % aller $N-CH_2-O$-Gruppen mit einem Alkylrest mit 1 bis 4 C-Atomen verethert sind. Die erfindungsgemäßen Lösungen enthalten außerdem eine Säure S), die gegebenenfalls teilweise oder vollständig neutralisiert vorliegen kann. Die erfindungsgemäßen wäßrigen Lösungen weisen einen pH-Wert bei 20°C von 4,5 bis 8,5 auf.

Der Veretherungsgrad der N-Methylolgruppen, der mindestens 30 % betragen muß, ist das zahlenmäßige Verhältnis von veretherten N-Methylolgruppen zur Summe aus veretherten und nicht-veretherten N-Methylolgruppen. Er kann bestimmt werden, indem man eine Probe des Produkts mit $D_2O$ mischt und unter folgenden Bedingungen ein $^{13}$C-NMR-Spektrum aufnimmt und auswertet:

Gerät: Bruker AC 200 mit Multikernausrüstung,

Frequenz: 50,33 MHz

Sweep Width: 116628 Hz (230 ppm); F 1 = -18 ppm, F 2 = 213 ppm

Size: 32 k

Pulse Angle: 30°
Bei dieser Methode wird das Verhältnis der Integrale für das gleiche C-Atom (z.B. das C-Atom, das mit 3 Stickstoffatomen verbunden ist) im veretherten und im nicht-veretherten Produkt bestimmt. Die chemische Verschiebung dieses C-Atoms ist im veretherten Produkt ausreichend verschieden von der im nicht-veretherten Produkt, um dieses Verhältnis der Integrale reproduzierbar ermitteln zu können.

Es wurde gefunden, daß sich die Lagerstabilität und die Wasserverdünnbarkeit der wäßrigen Lösungen in überraschender Weise verbessern lassen, wenn man nicht die Umsetzungsprodukte von Dicyandiamid und Formaldehyd als solche in Form einer wäßrigen Lösung lagert, sondern diese Umsetzungsprodukte vorher so modifiziert, daß mindestens 30, vorzugsweise 50 - 80 %, aller anwesenden -N-CH$_2$-O-Gruppen verethert vorliegen. Außerdem müssen, damit Lagerstabilität und Wasserverdünnbarkeit in ausreichend hohem Maße gewährleistet sind, die wäßrigen Lösungen einen pH-Wert bei 20°C von 4,5 bis 8,5 aufweisen. Eine noch bessere Lagerstabilität bzw. Wasserverdünnbarkeit läßt sich in vielen Fällen erzielen, wenn der pH-Wert zwischen 5,2 und 7,5 liegt, insbesondere zwischen 6,5 und 7,3.

Die erfindungsgemäßen wäßrigen Lösungen enthalten modifizierte Umsetzungsprodukte von Dicyandiamid (DCDA) mit Formaldehyd. Die Modifikation besteht darin, daß mindestens 30 % aller anwesenden -N-CH$_2$-O-Gruppen mit einem Alkylrest mit 1 bis 4 Kohlenstoffatomen verethert sind. Bei Umsetzung von DCDA mit Formaldehyd im Molverhältnis von 1:1 bis 1:2,5 bei einem pH-Wert im Bereich von 5 bis 10, vorzugsweise 7 bis 9 und bei einer Temperatur von weniger als 80°C entstehen durch Addition von N-H-Einheiten an Formaldehyd N-Methylolverbindungen, und zwar in erster Linie N-Methyloldicyandiamid und/oder N,N'-Dimethyloldicyandiamid, je nach Mengenverhältnis der Ausgangssubstanzen. Bevorzugt liegt in den modifizierten Umsetzungsprodukten das zahlenmäßige Verhältnis von aus DCDA stammenden Einheiten zu
N-CH$_2$O-Gruppen im Bereich von 1 : 1,15 bis 1 : 1,8. Diesem Wertebereich die Gesamtzahl der N-CH$_2$O-Gruppen zugrundegelegt, unabhängig davon, ob sie verethert sind oder als freie N-Methylolgruppen vorliegen. Die Einstellung des genannten Verhältnisses auf einen gewünschten Wert kann durch entsprechende Mengen an bei der Herstellung eingesetztem DCDA und Formaldehyd vorgenommen werden. Der Vorteil, welcher bei Einhaltung des genannten Bereichs für das Verhältnis von DCDA-Einheiten zu N-CH$_2$O-Gruppen resultiert, besteht darin, daß die erfindungsgemäßen Lösungen die Eigenschaft der guten Wasserverdünnbarkeit - auch nach langer Lagerzeit - in breiten Bereichen von Konzentration und Temperatur beibehalten. Dies gilt in noch verstärktem Ausmaß dann, wenn der oben angegebene Bereich von 1 : 1,15 bis 1 : 1,8 eingehalten wird.

Der genannte pH-Wert von 5,0 bis 10,0, vorzugsweise 7 bis 9, bei dem die Umsetzung von DCDA mit Formaldehyd abläuft, ist für den Fall, daß die Umsetzung in Wasser als Lösungsmittel stattfindet, der pH-Wert, den die wäßrige Lösung zu Beginn der Umsetzung aufweist. Für den bevorzugten Fall, daß der zur nachfolgenden Veretherung verwendete Alkohol, insbesondere Methanol, das Lösungsmittel ist, bezieht sich der genannte Bereich für den pH-Wert auf den pH-Wert, der sich ergibt, wenn eine Probe der alkoholischen Lösung vor Beginn der Umsetzung im Gewichtsverhältnis von 1 : 1 mit Wasser gemischt wird.

Der Alkohol, mit dem mindestens 30 %, vorzugsweise 50 bis 80 % der anwesenden N-Methylolgruppen verethert sind, ist ein linearer oder verzweiger, vorzugsweise einwertiger, ggfs. aber auch mehrwertiger, gesättigter aliphatischer Alkohol mit 1 bis 4 C-Atomen. Die Hydroxylgruppe des Alkohols, mit der die N-Methylolgruppen verethert sind, kann eine primäre, sekundäre oder tertiäre OH-Gruppe sein. Falls mit einem mehrwertigen Alkohol verethert wurde, tragen die Alkylreste der veretherten Produkte noch eine oder mehrere Hydroxylgruppen als Substituenten. Bevorzugt sind die N-Methylolgruppen des DCDA/Formaldehyd-Umsetzungsproduktes mit Methanol verethert; die Verwendung von Methanol besitzt den Vorteil, daß nach einer Veretherung in Methanol als Lösungsmittel das überschüssige Lösungsmittel wegen seines niedrigen Siedepunktes leichter entfernt werden kann als im Fall der Verwendung eines anderen Alkohols. Die mit Methanol veretherten Produkte sind u.a. aus diesem Grund kostengünstiger herstellbar als mit anderen Alkoholen veretherte Produkte.

Die erfindungsgemäßen wäßrigen Lösungen enthalten außer einem modifizierten ( = mindestens teilweise veretherten) DCDA / Formaldehyd-Umsetzungsprodukt noch eine Säure S). Diese Säure S) kann vollständig als freie Säure vorliegen, sie kann aber auch vollständig oder teilweise neutralisiert sein, d.h. vollständig oder teilweise in Form eines ihrer Salze vorliegen. Der Gehalt an Säure S) und/oder einem ihrer Salze in den erfindungsgemäßen Lösungen rührt daher, daß eine Säure S) als Katalysator für die vorangegangene Veretherung verwendet wurde und/oder weil eine Säure S) oder ein Salz der Säure S) zur Einstellung des pH-Werts der erfindungsgemäßen Lösung diente. Die nachträgliche Abtrennung der Säure S) oder ihres Salzes ist zwar prinzipiell möglich, aber unwirtschaftlich und nicht erforderlich, sofern nicht im Einzelfall die anwendungstechnischen Eigenschaften der Lösung durch diese Beimengungen negativ beeinflußt werden. Die Säure S) ist bevorzugt Amidosulfonsäure. Es hat sich gezeigt, daß bei Anwesenheit von Amidosulfonsäure oder deren Salzen die Lagerstabilität und die Wasserverdünnbarkeit der erfindungsgemäßen Lösungen besonders gut sind. Anstelle von Amidosulfonsäure können auch andere anorganische starke Säuren verwendet werden, also Säuren, welche in wäßriger Lösung im wesentlichen vollständig dissoziieren. Im Fall mehrbasischer Säuren ist unter im wesentlichen vollständiger Dissoziierung zu verstehen, daß pro Molekül Saure 1 Proton vollständig oder nahezu vollständig in Wasser abdissoziiert. Als gut geeignet haben sich Salzsäure und Phosphorsäure erwiesen. Bevorzugt liegt die Säure S) teilweise oder vollständig neutralisiert vor, insbesondere als Ammoniumsalz. Ammoniumionen als Kationen besitzen den Vorteil, daß bei der Verwendung der erfindungsgemäßen wäßrigen Lösungen als Bestandteil von Mitteln zur Flammfestausrüstung von Fasermaterialien eine zusätzliche Menge an Stickstoff enthalten ist, welche die Effektivität dieser Ausrüstung erhöhen kann.

Die Menge an Säure S) bzw. deren Salz in der wäßrigen Lösung ist vorzugsweise so bemessen, daß pro Mol aus DCDA stammenden Einheiten im DCDA / Formaldehyd-Umsetzungsprodukt (Komponente a)) 0,05/n bis 0,3/n, vorzugsweise 0,1/n bis 0,2/n Mol Säure S), ggfs. in teilweise oder vollständig neutralisierter Form vorliegen. Hierbei stellt n die Wertigkeit der Säure S) dar.

Es ist günstig, wenn die erfindungsgemäßen wäßrigen Lösungen ein Ammoniumphosphat enthalten. Dieses Phosphat kann nach Herstellung der Lösungen zusätzlich hinzugefügt worden sein oder es kann im letzten Schritt bei ihrer Herstellung zur Einstellung des pH-Werts verwendet worden sein. Es kann ferner deshalb in den Lösungen vorliegen, weil Phosphorsäure bei der Veretherung des DCDA / Formaldehyd-Umsetzungsproduktes als Katalysator (Säure S)) verwendet und der pH-Wert im letzten Schritt des Herstellungsverfahrens mittels Ammoniak auf einen Wert von 4,5 bis 8,5 eingestellt wurde. Da die erfindungsgemäßen wäßrigen Lösungen einen pH-Wert im Bereich von 4,5 bis 8,5 aufweisen, liegt ein ggf. darin enthaltenes Ammoniumphosphat in erster Linie in Form von Diammoniumhydrogenphosphat vor. Die Anwesenheit von Diammoniumhydrogenphosphat ist deshalb günstig, weil Verbindungen, welche Stickstoff und/oder Phosphor enthalten, zur Erhöhung der Effektivität von Flammfestausrüstungen dienen können.

In einer bevorzugten Ausführungsform enthalten die erfindungsgemäßen wäßrigen Lösungen zusätzlich zur Säure S) noch Borsäure und/oder ein Salz der Borsäure. Es hat sich gezeigt, daß mit solchen, Borsäure und/oder Borat enthaltenden, Lösungen hervorragende Flammschutzeffekte auf Fasermaterialien erreicht werden können. Zweckmäßigerweise enthalten die Lösungen hierzu Borsäure und/oder Borat in solchen Mengen, daß 1,5 bis 11 Gew.% (bevorzugt zwischen 4 und 8 Gew.%) Borverbindung, berechnet als $B_2O_3$ und bezogen auf das Gesamtgewicht der Lösung anwesend sind. Die Anwesenheit von einer der genannten Borverbindungen in den erfindungsgemäßen Lösungen bewirkt - unter Beibehaltung der guten Lagerstabilität und Wasserverdünnbarkeit auch nach langer Lagerzeit -, daß die Lösungen als solche, d.h. ohne weitere Zusätze für Flammschutzausrüstung von Fasermaterialien geeignet sind. Den erfindungsgemäßen Lösungen kann statt bei der Herstellung auch nach Lagerung eine wäßrige Lösung von Borsäure hinzugefügt werden, ohne daß Ausfällungen auftreten. Dies ist weiter unten für den Fall der Vereinigung einer erfindungsgemäßen Lösung mit einer Lösung L), welche Borsäure enthält, beschrieben. Der Vorteil, der aus der Verwendung der schwachen Säure $H_3BO_3$ gegenüber Phosphorsäure resultiert, besteht darin, daß Fasermaterialien nicht in stark saurem pH-Bereich ausgerüstet werden und so die Gefahr der Faserschädigung reduziert ist; dies ist vor allem von Bedeutung, wenn nach der Ausrüstung die Fasermaterialien auf hohe Temperaturen zwecks Aushärtung der Ausrüstung erhitzt werden. Bei dem in der US-PS 4 073 617 beschriebenen Verfahren dagegen muß mit einer starken Säure, nämlich Phosphorsäure, gearbeitet werden, da andernfalls - nach längerer Lagerzeit - die nichtveretherten DCDA/Formaldehyd-Umsetzungsprodukte beim Verdünnen zu Ausfällungen führen.

In einer weiteren bevorzugten Ausführungsform enthalten die erfindungsgemäßen Lösungen zusätzlich ein Mittel, welches Formaldehyd abfängt. Es hat sich gezeigt, daß hierdurch einerseits der Gehalt an Formaldehyd auf einem Fasermaterial verringert werden kann, das unter Verwendung der erfindungsgemäßen Lösungen ausgerüstet ist. Dieser Vorteil ergibt sich vor allem auch dann, wenn eine erfindungsgemäße Lösung vor ihrer Anwendung mit einer Lösung L) wie unten beschrieben, vereinigt wird und wenn das Fasermaterial nach der Ausrüstung thermisch behandelt wird. Außerdem lassen sich durch den Zusatz von Formaldehyd abfangenden Mitteln in gewissen Fällen Verbesserungen bezüglich Flammfestigkeit der ausgerüsteten Fasermaterialien erzielen.

Vielfach ist es günstig, das Formaldehyd-abfangende Mittel den erfindungsgemäßen Lösungen erst kurz vor der Ausrüstung der Fasermaterialien zuzusetzen, z.B. also einer Ausrüstungsflotte zuzugeben, welche eine erfindungsgemäße Lösung und ggf. eine Lösung L enthält und die schon mit Wasser auf Gebrauchskonzentration verdünnt worden ist. Die Menge an Formaldehyd-abfangendem Mittel in einer solchen Ausrüstungsflotte liegt zweckmäßigerweise im Bereich von 5 bis 30 Gew.%, bezogen auf Gesamtlösung.

Geeignete Mittel zum Abfangen von Formaldehyd sind Produkte, welche mit Formaldehyd reagieren,

4

insbesondere Harnstoff oder substituierte Harnstoffe wie Ethylenharnstoff, in dem die beiden N-Atome des Harnstoffs über eine -CH$_2$-CH$_2$-Brücke verbunden sind. Es kann auch ein Gemisch aus Harnstoff und Ethylenharnstoff verwendet werden. Weitere geeignete Produkte sind mehrwertige Alkohole, wie Glykole oder Polyglykole, z.B. Polyethylenglykole. Auch Glykolsäure kann verwendet werden. Sonstige geeignete Produkte sind in T.F. Cooke et al., "The Chemistry of Formaldehyde Release from Durable Press Fabrics", Text. Chem. Color., June 1982, Seite 136/33 ff, und in B.A. Kottes Andrews et al. in "Textile Research Journal", Januar 1989, Seite 53 ff beschrieben. Es ist in manchen Fällen von Vorteil, wenn das Formaldehyd abfangende Mittel zusammen mit einem Oxidationsmittel angewandt wird, z.B. zusammen mit Natriumperoxosulfat oder Natriumperoxodisulfat in einer Menge von 0,2 bis 5 Gew.%, bezogen auf die Menge an Formaldehyd abfangendem Mittel. Hierdurch läßt sich nämlich eine bessere Fixierung der Flammfestausrüstung auf dem Fasermaterial erreichen, die zur Fixierung (Kondensation) erforderlichen Temperaturen können niedriger liegen; daneben erhält in einer Reihe von Fällen das Fasermaterial einen angenehmeren Griff.

In einer weiteren bevorzugten Ausführungsform enthalten die erfindungsgemäßen Lösungen zusätzlich zur Säure S, die in diesem Fall keine Phosphonsäure der Formel R - P(O) (OH)$_2$ der nachfolgend beschriebenen Art ist, noch eine Phosphonsäure der Formel R - P(O) (OH)$_2$. R stellt hierbei einen Alkylrest mit 1 bis 4 Kohlenstoffatomen dar. Bevorzugt steht R für CH$_3$. Die Phosphonsäure kann, je nach dem gewünschten pH-Wert der Lösung, in freier Form oder in vollständig oder teilweise neutralisierter Form, z.B. als Ammoniumsalz, vorliegen. Bevorzugt enthalten die erfindungsgemäßen Lösungen 0,5 bis 3 Gew.% an Phosphonsäure. Der Zusatz von Phosphonsäure - insbesondere von Methanphosphonsäure - bewirkt eine weitere Verbesserung der Lagerstabilität, vor allem bei tiefen Temperaturen. An Stelle der Phosphonsäure ist auch ein Zusatz von Oxalsäure sehr gut dazu geeignet, die Stabilität der Lösungen noch weiter zu erhöhen.

Die erfindungsgemäßen Lösungen können in vorteilhafter Weise nach folgendem Verfahren hergestellt werden:

Man verwendet denjenigen Alkohol als Lösungsmittel, mit dem die N-Methylolgruppen des Umsetzungsproduktes von Dicyandiamid (DCDA) und Formaldehyd verethert werden sollen. Dieser Alkohol ist bevorzugt Methanol. Man fügt zu dem Lösungsmittel die entsprechenden Mengen DCDA und Formaldehyd, wobei in einer Reihe von Fällen der Formaldehyd als Paraformaldehyd eingesetzt wird. Das molare Verhältnis von DCDA zu Formaldehyd liegt im Bereich von 1 : 1 bis 1 : 2,5, vorzugsweise im Bereich von 1: 1,15 bis 1 : 1,8, wobei im Fall der Verwendung von Paraformaldehyd sich diese Werte auf die Menge an monomerem Formaldehyd beziehen. Zweckmäßigerweise liegt das Gewichtsverhältnis aus der Summe von DCDA und Formaldehyd zu Lösungsmittel im Bereich von 1 : 0,5 bis 1 : 4. Der pH-Wert der Mischung aus Lösungsmittel, DCDA und Formaldehyd muß bei 5,0 bis 10,0 liegen; ein Bereich von 7 bis 9 ist bevorzugt. Der pH-Wert wird bestimmt aus einer Lösung, welche entsteht, wenn eine Probe des Gemisches aus Alkohol, DCDA und Formaldehyd vor Beginn der Umsetzung im Gewichtsverhältnis von 1 : 1 mit Wasser verdünnt wird.

Zur Umsetzung von DCDA mit Formaldehyd, die zur Bildung von N-Methylolgruppen führt, wird das Gemisch aus Lösungsmittel und den Reaktionsteilnehmern erhitzt, und zwar auf eine Temperatur von weniger als 80°C, vorzugsweise im Bereich von 50 bis 75°C. Im Fall von Methanol als Lösungsmittel kann unter Rückfluß gekocht werden. Die Zeitdauer der Umsetzung hängt von den Konzentrationen der Reaktionsteilnehmer und von der Temperatur ab; im Normalfall beträgt sie 10 bis 120 Minuten.

Nach beendeter Umsetzung kühlt man zweckmäßigerweise etwas ab, z.B. auf eine Temperatur zwischen 40 und 50°C und fügt bei dieser Temperatur eine Säure S) zu. Bevorzugt verwendet man 0,05/n bis 0,3/n, insbesondere 0,1/n bis 0,2/n Mol der Säure S) pro Mol an ursprünglich eingesetztem DCDA, wobei n die Wertigkeit der Säure S) ist. Die Säure S) ist bevorzugt eine starke anorganische Säure, die in wäßriger Lösung vollständig oder nahezu vollständig dissoziiert. Geeignet sind unter anderem Chlorwasserstoff, Phosphorsäure und vor allem Amidosulfonsäure. Die Säure S) sollte entweder in reiner Form oder als Lösung in demjenigen Alkohol zugegeben werden, der als Lösungsmittel für die Umsetzung von DCDA mit Formaldehyd verwendet wurde. Im Fall der Verwendung von Chlorwasserstoff kann dieser als Gas eingeleitet werden. Verdünnte wäßrige Lösungen der Säure S) sollten nicht eingesetzt werden, da die Anwesenheit von Wasser die nachfolgende Veretherungsreaktion nachteilig beeinflußt. Geringe Mengen Wasser stören jedoch nicht.

Bei Zugabe der Säure S) findet eine exotherme Reaktion statt, so daß die Säure bevorzugt schrittweise unter Kühlung des Systems hinzugefügt wird. Das Reaktionsgemisch wird während der Säurezugabe zweckmäßigerweise auf einer Temperatur von 40 bis 65, insbesondere 55 bis 65°C gehalten.

Nach beendeter Säurezugabe wird vorzugsweise die Temperatur wieder erhöht, z.B. auf 60 bis 80°C. Unter der katalytischen Wirkung der Säure S) werden N-Methylolgruppen des Umsetzungsprodukts aus DCDA und Formaldehyd mit dem gleichzeitig als Lösungsmittel dienenden Alkohol verethert. Man hält das Gemisch so lange bei erhöhter Temperatur, bis mindestens 30, vorzugsweise 50 bis 80 % aller anwesenden -N-CH$_2$-O-Gruppen verethert sind. Der Zeitpunkt, zu dem dies der Fall ist, läßt sich durch analytische Bestimmungen ermitteln. Normalerweise beträgt die Zeitdauer der Veretherung etwa 10 bis 240 Minuten.

Anschließend wird, wenn nicht im Einzelfall ein höherer Gehalt an Alkohol in den erfindungsgemäßen wäßrigen Lösungen erwünscht ist, ein wesentlicher Anteil des als Lösungsmittel dienenden Alkohols entfernt, d.h. 75 Gew. % oder mehr des überschüssigen Alkohols. Dies geschieht zweckmäßigerweise, bevor zum Reaktionsgemisch Wasser hinzugefügt wird. Vorzugsweise erfolgt die Entfernung des Alkohols durch Destillation. Den Alkohol direkt nach Beendigung der Veretherungsreaktion abzudestillieren ist jedoch ungünstig, weil unter dem katalytischen Einfluß der anwesenden Säure S) eine Etherrückspaltung auftreten würde. Dies läßt sich weitgehend oder vollständig verhindern, indem man vor dem Abdestillieren des Alkohols die Säure S) teilweise oder vollständig neutralisiert, zweckmäßigerweise bis zu einem pH-Wert im Bereich von 7 bis 8,5. Als gut geeignet hierfür hat sich ein Zusatz von Ammoniumcarbonat erwiesen. Nach der Neutralisation werden mindestens 75, vorzugsweise 80 bis 90 Gew. % des vorhandenen Alkohols abdestilliert, vorzugsweise unter schonenden Bedingungen, d.h. bei einer Temperatur von nicht mehr als 50 °C und unter vermindertem Druck, um das Ausmaß der Etherrückspaltung möglichst niedrig zu halten. Anschließend an die Destillation fügt man zum Rückstand Wasser hinzu, gegebenenfalls nach Abkühlen des Rückstands auf Raumtemperatur. Die Menge an Wasser wird so bemessen, daß eine klare Lösung entsteht, wozu im Normalfall etwa 0,3 bis 1 g Wasser pro g Rückstand erforderlich sind. Schließlich muß gegebenenfalls noch der pH-Wert der entstandenen wäßrigen Lösung auf einen Wert von 4,5 bis 8,5, vorzugsweise von 5,2 bis 7,5, insbesondere 6,5 bis 7,3 bei 20 °C eingestellt werden. Dies kann gleichzeitig mit der Zugabe von Wasser, d.h. durch Zugabe einer wäßrigen Lösung des entsprechenden Mittels zur pH-Wert-Einstellung oder im Anschluß daran erfolgen. Als besonders geeignetes Mittel hierfür hat sich Diammoniumhydrogenphosphat erwiesen. Die Einstellung des pH-Werts auf einen Wert im genannten Bereich muß vorgenommen werden, wenn die Lösung nach der Zugabe von Wasser einen pH-Wert aufweist, der außerhalb dieses Bereichs liegt. Aber auch dann, wenn der pH-Wert nach Zugabe von Wasser bereits im genannten Bereich liegt, kann durch Zusatz entsprechender Substanzen, wie Diammoniumhydrogenphosphat der pH-Wert auf einen anderen Wert eingestellt werden, sofern nur der resultierende pH-Wert im genannten Bereich liegt. Auf diese Weise ist außerdem eine Abpufferung der Lösung erzielbar, die sich in manchen Fällen vorteilhaft auswirkt. Um die Stabilität der Lösungen noch weiter zu erhöhen, kann es von Vorteil sein, nach der Zugabe von Diammoniumhydrogenphosphat die Lösung nochmals kurzzeitig zu erhitzen, z.B. während 5 - 60 Minuten, vorzugsweise 5 bis 20 Minuten, auf 40 bis 95 °C, insbesondere auf 60 - 90 °C. Bei dieser Wärmebehandlung durch kurzzeitiges Erhitzen, das ggf. unter vermindertem Druck erfolgt, können weitere Anteile von noch anwesendem Alkohol, z.B. Methanol, entfernt werden. Gegebenenfalls setzt man nach der Zugabe von Wasser den erfindungsgemäßen Lösungen ein Mittel zu, welches Formaldehyd abfängt, wie oben beschrieben.

In einer bevorzugten Ausführungsform des Verfahrens wird gleichzeitig mit der Zugabe von Wasser oder daran anschließend Borsäureanydrid (B$_2$O$_3$), Borsäure oder ein Salz der Borsäure zugefügt, zweckmäßigerweise in einer solchen Menge, daß die erhaltene Lösung 1,5 bis 11 Gew.% Borverbindung enthält, berechnet als B$_2$O$_3$ und bezogen auf das Gesamtgewicht der Lösung. Besonders günstig ist hierbei die Zugabe von B$_2$O$_3$ oder Borsäure in fester Form zu der wäßrigen Lösung. Es wird bevorzugt, die Borverbindung nach der Zugabe von Wasser hinzuzufügen und die Lösung vor Zugabe der Borverbindung auf 40 - 90 °C zu erwärmen.

In einer bevorzugten Ausführungsform des erfindungsgemäßen Verfahrens setzt man den erfindungsgemäßen Lösungen eine Phosphonsäure der Formel R - P(O)(OH)$_2$ zu, vorzugsweise Methanphosphonsäure (R = CH$_3$). Die Zugabe der Phosphonsäure kann gleichzeitig mit der oben erwähnten Zugabe von Wasser zum Rückstand erfolgen oder zu einem späteren Zeitpunkt. Es ist von Vorteil, wenn nach der Zugabe von Phosphonsäure die erfindungsgemäßen Lösungen noch einer Wärmebehandlung der oben genannten Art, nämlich Erhitzen auf 40 bis 95 °C, insbesondere 60 bis 90 °C während einer Zeit von 5 bis 60, insbesondere 5 bis 20 Minuten, unterworfen werden. Der Zusatz von Phosphonsäure bewirkt eine weitere Erhöhung der Lagerstabilität der erfindungsgemäßen Lösungen. Die Menge an Phosphonsäure wird zweckmäßigerweise so bemessen, daß die Lösungen 0,5 bis 3 Gew.% der Phosphonsäure enthalten. Dieser Bereich von 0,5 bis 3 Gew.% bezieht sich auf die fertigen Lösungen, die nach der ggf. durchgeführten Wärmebehandlung vorliegen.

An Stelle von Phosphonsäure ist auch der Zusatz von Oxalsäure sehr gut dazu geeignet, die Stabilität der Lösungen weiter zu erhöhen.

Die erfindungsgemäßen wäßrigen Lösungen können zur Behandlung von Fasermaterial, insbesondere Textilmaterial, verwendet werden. Sie sind, ggf. nach einer Abmischung mit anderen Produkten, wie unten näher erläutert wird, besonders gut zur Flammfestausrüstung von Fasermaterialien geeignet, die aus Cellulosefasern bestehen oder Cellulosefasern enthalten.

In bestimmten Fällen, vor allem dann, wenn die beschriebenen Borzusätze in den wäßrigen Lösungen anwesend sind, können die erfindungsgemäßen Lösungen als solche für die Behandlung von Fasermaterialien eingesetzt werden, ggf. nach Verdünnung mit Wasser. Durch die Verdünnung mit Wasser erhält man eine Ausrüstungsflotte in der gewünschten Anwendungskonzentration. In anderen Fällen empfiehlt es sich, die Lösungen mit anderen Produkten abzumischen. Eine bevorzugte Ausführungsform ihrer Verwendung für die Behandlung (Flammschutzausrüstung) von Fasermaterialien besteht darin, eine erfindungsgemäße Lösung vor ihrer Anwendung mit einer zweiten wäßrigen Lösung L) zu vereinigen, welche Phosphorsäure oder Borsäure enthält. Bei der Herstellung einer Phosphorsäure enthaltenden Lösung L), die im folgenden mit Lösung L 1) bezeichnet wird, kann man z.B. von konzentrierter Ortho- oder Pyrophosphorsäure ausgehen, die mit Wasser auf die gewünschte Konzentration verdünnt wird. In einer Reihe von Fällen ist es vorteilhaft, wenn die Lösung L 1) Phosphorsäure und ein Umsetzungsprodukt von DCDA mit Formaldehyd enthält oder ein Produkt, welches aus einem solchen Umsetzungsprodukt in wäßriger Phosphorsäure, ggf. nach Erhitzen, entsteht. Dieses in Lösung L 1) enthaltene DCDA/Formaldehyd-Umsetzungsprodukt kann nach bekannten Verfahren durch Umsetzung von DCDA mit Formaldehyd in Wasser als Lösungsmittel erhalten werden, wobei beispielsweise DCDA mit Formaldehyd in saurer wäßriger Lösung im Molverhältnis von 1 : 0,4 bis 1 : 2,5 und bei einer Temperatur von weniger als 100 °C umgesetzt wird, so daß, wie oben beschrieben, primär N-Methyloldicyandiamid und/oder N,N'-Dimethyloldicyandiamid entsteht. Es handelt sich also bei den DCDA/Formaldehyd-Umsetzungsprodukten, welche in Lösung L 1) neben Phosphorsäure enthalten sein können, nicht um veretherte Umsetzungsprodukte, wie sie in den erfindungsgemäßen Lösungen vorliegen. Auf Grund der Herstellung in saurer wäßriger Lösung und ggf. bei höheren Temperaturen bis zu 100 °C können auch andere Produkte als N-Methyloldicyanamid bzw. N,N'-Dimethylol-Dicyandiamid entstehen, z.B. Folgeprodukte, welche durch Abspaltung von Verbindungen, wie Ammoniak und Kohlendioxid gebildet werden. Zweckmäßigerweise erhitzt man die wäßrige phosporsaure Lösung L 1), welche das DCDA/Formaldehyd-Umsetzungsprodukt enthält, vor ihrer Vereinigung mit der erfindungsgemäßen Lösung so lange, bis keine Gasentwicklung mehr auftritt. In wäßriger Phosphorsäurelösung wird bei erhöhter Temperatur aus dem Umsetzungsprodukt von DCDA mit Formaldehyd nämlich Ammoniak und Kohlendioxid abgespalten. Nach Ende der Gasentwicklung wird die Lösung L 1) auf Raumtemperatur abgekühlt und kann nun mit einer Lösung gemäß der Erfindung vereinigt werden. In einer anderen bevorzugten Ausführungsform enthält die wäßrige Lösung L) nicht Phosphorsäure, sondern Borsäure. Sie kann erhalten werden durch Lösen von Borsäure oder Borsäureanhydrid (B$_2$O$_3$) in Wasser. Eine solche Lösung L), welche Borsäure enthält, wird im Folgenden als Lösung L 2) bezeichnet. In der Lösung L 2) ist, von Ausnahmefällen abgesehen, kein DCDA/Formaldehyd-Umsetzungsprodukt anwesend.

Die Vereinigung einer erfindungsgemäßen Lösung mit einer Lösung L 1) oder L 2) ist, von Ausnahmefällen abgesehen, nur dann zweckmäßig, wenn die erfindungsgemäße Lösung keine Borverbindung enthält.

Es ist vorteilhaft, wenn eine Lösung L 1) mit einer erfindungsgemäßen Lösung in solchen Mengenverhältnissen vereinigt wird, daß die dabei entstehende Lösung einen pH-Wert von 1,7 bis 3,5 bei 20 °C, insbesondere von 2,3 bis 3,0, aufweist. Die Lösung L 1) selbst besitzt vorzugsweise einen pH-Wert im Bereich von 0,6 bis 2,2, unabhängig davon, ob sie nur Phosphorsäure oder zusätzlich weitere Produkte enthält. Falls sie ein Umsetzungsprodukt von DCDA mit Formaldehyd oder ein Folgeprodukt davon enthält, liegt dieses Produkt vorzugsweise in einer Menge von 25 bis 35 Gew.%, bezogen auf die Gesamtmenge an Lösung L 1), vor.

Für den Fall, daß eine erfindungsgemäße Lösung vor ihrer Anwendung mit einer Lösung L 2), also einer wäßrigen Borsäurelösung, vereinigt wird, besitzt die hierfür verwendete Lösung L 2) vorzugsweise einen pH-Wert bei 20 °C im Bereich von 5,0 bis 6,8. Die Vereinigung der beiden Lösungen erfolgt in diesem Fall zweckmäßigerweise in solchen Mengenverhältnissen, daß die nach Vereinigung erhaltene Lösung einen pH-Wert bei 20 °C im Bereich von 5 bis 7 hat.

Bei der Anwendung der erfindungsgemäßen Lösungen bzw. deren Mischungen mit einer Lösung L) für die Flammschutzausrüstung kann es erwünscht sein, die flammhemmende Wirkung noch mit anderen Effekten zu kombinieren. Hierzu können den Lösungen vor ihrer Anwendung weitere für die Ausrüstung von Fasermaterialien übliche Produkte hinzugefügt werden, wie z.B. Weichgriffmittel. Es können auch den Mischungen, die durch Vereinigen einer erfindungsgemäßen Lösung mit einer Lösung L) entstehen, Produkte zugesetzt werden, welche Formaldehyd abfangen. Geeignete Mittel sind oben beschrieben. Die Menge an Formaldehyd abfangendem Mittel wird vorzugsweise so bemessen, daß die erhaltene Lösung, welche als Ausrüstungsflotte verwendet wird, 5 bis 30 Gew.% dieses Mittels enthält.

Die Fasermaterialien, welche mit den erfindungsgemäßen Lösungen oder mit Zusammensetzungen, welche diese enthalten, behandelt werden, sind in der Regel Flächengebilde, vor allem textiler Art, wie Gewebe oder Gewirke. Sie können jedoch auch in Form von "non-wovens" (Vliesen) vorliegen. Die Behandlung kann nach üblichen Methoden erfolgen, wie z.B. mittels Imprägnierung in einem Foulard-Verfahren. Besonders gut geeignet sind Zusammensetzungen, welche aus den erfindungsgemäßen Lösungen bestehen oder diese enthalten, für die Flammschutzausrüstung von Materialien, welche aus Cellulosefasern bestehen oder diese enthalten. Im Normalfall werden die erfindungsgmäßen Lösungen vor ihrer Anwendung mit Wasser verdünnt und/oder mit anderen wäßrigen Zusammensetzungen abgemischt.

Es hat sich gezeigt, daß bei Verwendung einer Mischung aus einer erfindungsgemäßen Lösung und einer Borsäurelösung (L 2) oder einer Lösung L 1), welche ein Umsetzungsprodukt von DCDA mit Formaldehyd sowie Phosphorsäure enthält, auf Cellulosematerialien bei üblichen Auflagemengen eine gute flammhemmende Wirkung erzielt wird. Bei üblichen Auflagen auf dem Cellulosefasermaterial und nach Temperaturbehandlung zwecks Aushärtung der Ausrüstung lassen sich, insbesondere dann, wenn eine phosphorsaure Lösung L 1), welche ein DCDA-Formaldehyd-Umsetzungsprodukt enthält, verwendet wird, Waren erhalten, deren Flammschutzausrüstung wässerungsbeständig ist. Diese Waren bestehen den Britischen Standard-Test BS 5852.

Erfindungsgemäße Lösungen, welche eine Borverbindung, wie oben beschrieben, enthalten, lassen sich vorteilhaft für die Flammfestausrüstung von Artikeln verwenden, welche "Abfall-Baumwolle" (Reißwolle) und einen (Kunststoff-)Binder enthalten. Ein Beispiel für einen solchen Artikel ist ein Flächengebilde, welches im Automobilsektor, z.B. als Oberseite einer Ablagefläche, eingesetzt wird. Bei der Herstellung solcher Artikel werden zur Verfestigung von Vlies aus Fasern und Binder hohe Temperaturen, d.h. bis zu 200°C, angewandt. Von der Flammfestausrüstung wird daher gefordert, daß sie auch nach Anwendung solcher Temperaturen effektiv und wenig korrosiv ist, also keinen stark sauren pH-Wert aufweist. Wässerungsbeständigkeit und Waschbeständigkeit dagegen besitzen bei diesen Artikeln eine geringe Bedeutung.

Die Erfindung wird nunmehr durch Ausführungsbeispiele veranschaulicht. Die Beispiele 1 bis 4 beschreiben die Herstellung erfindungsgemäßer Lösungen, Beispiel 5 die Herstellung einer Lösung L 1), die Beispiele 6 und 7 Lösungen, welche durch Vereinigung erfindungsgemäßer Lösungen mit einer Lösung L 1) erhalten werden, Beispiel 8 die Verwendung der beschriebenen Lösungen zur Ausrüstung von Fasermaterialien.

Beispiel 1

168 g (2 Mol) Dicyandiamid (DCDA) und 75,9 g 95 %iger Paraformaldehyd (2,4 Mol an monomerem Formaldehyd) werden in 384 g (12 Mol) Methanol eingerührt. In einem Kolben mit Rückflußkühler wird das Gemisch auf 60°C aufgeheizt und 30 Minuten bei etwa 60°C gehalten. Anschließend wird auf 40°C abgekühlt und 29,1 g (0,3 Mol) Amidosulfonsäure in fester Form zugegeben. Die Temperatur steigt dabei auf 60°C an. Nach beendeter Säurezugabe wird 10 Minuten unter Rückfluß gekocht. Man kühlt auf 40°C ab und erhält eine klare Lösung. Es werden bei 40°C ca. 35 g Ammoniumcarbonat in fester Form zugegeben. Anschließend werden bei 40°C Badtemperatur etwa 310 g Methanol unter vermindertem Druck abdestilliert. Zum Rückstand fügt man nach Abkühlen eine Lösung von 29 g Diammoniumhydrogenphosphat in 216 g Wasser und heizt ca. 10 Minuten auf etwa 90°C.

Eine Probe des Ausgangsgemisches vor Beginn der Umsetzung wurde zur Bestimmung des pH-Werts im Gewichtsverhältnis 1 : 1 mit Wasser (pH 7,14) verdünnt. Die erhaltene Probe wies einen pH-Wert bei 20°C von 8,9 auf. Nach der Methylolierung, jedoch noch vor Zugabe von Amidosulfonsäure, besaß das Reaktionsprodukt einen pH-Wert von 8,35. Nach Zugabe der Amidosulfonsäure betrug der pH-Wert 4,31, nach Zugabe von Ammoniumcarbonat 7,0. Nach Zugabe von Wasser und Diammoniumhydrogenphosphat und anschließendem Erhitzen wurde ein pH-Wert von 6,6 gemessen.

Der Veretherungsgrad, d.h. das zahlenmäßige Verhältnis von $-N-CH_2OCH_3$-Gruppen zur Gesamtzahl aller $N-CH_2-O$-Gruppen, betrug 60 % (bestimmt nach der obengenannten Methode).

Beispiel 2 a

Beispiel 1 wurde mit folgenden Abänderungen wiederholt:

2,7 Mol Formaldehyd (als Paraformaldehyd)

48 g Ammoniumcarbonat.

Die Lösung wies nach Zugabe von Wasser und Phosphat und anschließendem Erhitzen einen pH-Wert von 6,2 auf.

Beispiele 2 b bis 2 f

168 g (2 Mol) Dicyandiamid (DCDA) und 75,9 g 95%iger Paraformaldehyd (2,4 Mol an monomerem Formaldehyd) werden in 384 g (12 Mol) Methanol eingerührt. In einem Kolben mit Rückflußkühler wird das Gemisch auf 70°C (Rückfluß) aufgeheizt und 90 Minuten bei Rückfluß gehalten. Anschließend wird auf 40°C abgekühlt und 29,1 g (0,3 Mol) Amidosulfonsäure in fester Form zugegeben. Die Temperatur steigt dabei auf 60°C an. Nach beendeter Säurezugabe wird 10 Minuten unter Rückfluß gekocht. Man kühlt auf 40°C ab und erhält eine klare Lösung. Es werden bei 40°C ca. 35 g Ammoniumcarbonat in fester Form zugegeben. Anschließend werden unter vermindertem Druck etwa [1])g Methanol abdestilliert. (4/5 davon bei 60°C Badtemperatur und 1/5 bei 90°C Badtemperatur). Zum Rückstand fügt man nach Abkühlen 29 g (0,22 Mol) Diammoniumhydrogenphosphat, 216 g Wasser und 48 g (0,77 Mol) Borsäure in fester Form [4]). Nach Aufheizen auf [2])wird eine 2. Destillation durchgeführt, bei der 62 g Methanol/Wasser-Gemisch abdestilliert werden und die Innentemperatur 50°C nicht unterschreitet. Danach werden 106 g Wasser zugegeben [3])und auf 80°C aufgeheizt [5]). Nach 15 Minuten wird abgekühlt.

Beispiel 3

Zu 450 g einer Lösung, die gemäß Beispiel 2 a erhalten wurde, gab man 35 g $B_2O_3$ in fester Form bei 50°C und verdünnte mit Wasser, bis ein Gesamtvolumen von 1 l erhalten wurde. Die erhaltene klare Lösung wies einen pH-Wert von 6,48 auf.

Selbst bei Lagerung bei einer Temperatur von 60°C waren die Lösungen aus den Beispielen 1 - 3 noch nach einer Lagerzeit von 25 Tagen homogen und beliebig mit Wasser verdünnbar.

Beispiel 4 a

Zu einer Lösung, die gemäß den Angaben von Beispiel 2 a unter Zusatz von 7,0 g 100 %iger Methanphosphonsäure erhalten wurde, wurde festes $B_2O_3$ gemäß den Angaben von Beispiel 3 hinzugefügt. Die Methanphosphonsäure wurde hierbei zusammen mit Wasser und Phosphat zugegeben. Anschließend wurde weitergearbeitet wie in Beispiel 3.

Beispiel 4 b

Zu einer nach Beispiel 3 erhaltenen Lösung gab man 7,0 g 100 %iger Methanphosphonsäure. Anschließend wurde die Lösung bei 80°C 15 Minuten lang behandelt.

Die nach den Beispielen 4 a und 4 b erhaltenen Lösungen besaßen ausgezeichnete Lagerstabilität bei tiefen Temperaturen.

Beispiel 5

Herstellung einer Lösung L 1):
336 g (4 Mol) Dicyandiamid und 456 g einer 37 %igen Lösung von Formaldehyd in Wasser (5,6 Mol

[1]) = 360 in Beispielen   2 d, 2 e und 2 f

[1]) = 310 in Beispielen   2 b und 2 c

[4]) In Beispiel   2 f wurden   außer   Borsäure   noch   3,5 g 100%iger   Methanphosphonsäure zugegeben

[2]) = 50°C   in Beispielen   2 b und 2 c = 60°C   in Beispielen   2 d und 2 e = 75°C   in Beispiel   2 f; in Beispiel   2 f wurde   anschließend   15 Minuten   lang   eine   Temperatur   von 75°C   aufrech-terhalten

[3]) In Beispielen   2 b und 2 f wurden   nur 106 g Wasser   zugegeben;   in Beispiel   2 c wurden   4 g Oxalsäuredihydrat,   in Beispiel   2 d 3,5 g 100%iger   Methanphosphonsäure,   in Beispiel   2 e 7,0 g 100%iger   Methanphosphonsäure   zusätzlich   zugegeben

[5]) In Beispiel   2 f wurde   direkt   nach   der   Zugabe   von   106 g Wasser   abgekühlt

Formaldehyd) wurden auf 60˚C erhitzt und 30 Minuten bei dieser Temperatur gehalten. Anschließend wurden 784 g 80 %ige wäßrige Phosphorsäurelösung bei 80˚C langsam zugegeben. Nach 105 Minuten entwickelten sich keine Gase mehr. Es wurde eine bei Raumtemperatur klare Lösung eines pH-Werts von 1 erhalten.

Beispiel 6

300 g einer nach Beispiel 5 erhaltenen Lösung L 1) wurden mit 300 g einer Lösung gemäß Beispiel 1 vereinigt, in einem weiteren Versuch mit 300 g einer Lösung gemäß Beispiel 2 a. Die so erhaltenen vereinigten Lösungen wurden jeweils mit Wasser bis zu einem Gesamtvolumen von 1 l verdünnt. Es traten keine Ausfällungen auf, sondern die erhaltenen Lösungen waren klar.

Beispiel 7

Zu der Lösung von Beispiel 6, die aus den Lösungen der Beispiele 1 und 5 erhalten wurde, gab man als Formaldehyd abfangendes Mittel 500 g einer wäßrigen Lösung, die 50 Gew.% Harnstoff und 4 Gew.% Ethylenharnstoff enthielt. Die erhaltenen Lösungen waren weiter mit Wasser verdünnbar.

Beispiel 8

Mit den Lösungen der Beispiele 3,6 und 7 wurden Gewebe aus 50% Baumwolle und 50 % Viskose mittels eines Foulard-Verfahrens ausgerüstet. Nach Trocknung bei ca. 150˚C (im Fall der Lösung von Beispiel 3 190˚C) wurde im Fall der Lösung von Beispiel 3 eine Auflage von etwa 16 Gew.%, im Fall der Lösungen der Beispiele 6 und 7 eine Auflage von 20 bis 25 Gew.% bestimmt. Selbst nach 5-minütiger Trocknung bei 190˚C bis 205˚C zeigten die Gewebe, welche mit einer Lösung gemäß Beispiel 3 ausgerüstet waren, keine Vergilbung und einen guten Flammschutzeffekt: nach Entfernen der Flamme bei einem Brenntest wurde kein Nachbrennen und kein Nachglimmen festgestellt. Bei den mit Lösungen gemäß Beispielen 6 und 7 ausgerüsteten Geweben wurden folgende Daten bestimmt
a) Verhalten beim British-Standard-Test BS 5852.
b) Formaldehyd-Gehalt auf dem Gewebe nach Trocknung bei ca. 150˚C.
c) pH-Wert des Gewebes.
Zu a) Alle Proben bestanden den Test BS 5852 (nach dem "soaking" Nachbrennzeit von weniger als 20 sec.).
Zu b) Mit steigender Menge an Ethylenharnstoff wurde eine Reduzierung der Menge an freiem Formaldehyd auf dem Gewebe ermittelt.
Zu c) Zur Bestimmung des "pH-Werts des Gewebes" wurden 2 g fein zerschnittenes Gewebe in 100 ml destilliertem Wasser 1 Stunde bei Raumtemperatur geschüttelt und der pH-Wert gemessen. Dieser pH-Wert steigt mit zunehmender Menge an Harnstoff bzw. Ethylenharnstoff an. Bei Variation der Menge an Formaldehyd abfangendem Mittel wurde gefunden, daß es möglich ist, bei einem GewebepH-Wert von mehr als 5,6 eine Reduzierung der Menge an freiem Formaldehyd unter 150 ppm zu erreichen, wobei die entsprechend ausgerüsteten Materialien noch den British Standard-Test BS 5852 bestehen.

Beispiel 9

Zu 100 g einer Lösung, die gemäß Beispiel 1 erhalten wurde, gab man 9 g wasserfreie Borsäure in fester Form bei 60˚C. Die erhaltene klare Lösung wies einen pH-Wert von 6,25 auf. Diese Lösung wurde im Gewichtsverhältnis 1 : 1 mit Wasser verdünnt und auf Gewebe aus 100 % Baumwolle appliziert (Foulard).Ohne vorhergehende Trocknung wurde bei 190˚C 5 Minuten lang kondensiert. Das so behandelte Gewebe wies bei einem Brenntest gemäß DIN 54 336 eine Brennzeit von 0 Sekunden (Zeit zwischen der Entfernung der Zündquelle und Erlöschen der Flamme auf dem Gewebe) auf. Die Nachglimmzeit betrug ebenfalls 0 Sekunden.

**Patentansprüche**

**1.** Wäßrige Lösung eines pH-Werts von 4,5 bis 8,5, insbesondere 5,2 bis 7,5 bei 20˚C, enthaltend
a) ein Produkt, das bei der Umsetzung von Dicyandiamid (DCDA) mit Formaldehyd im Molverhältnis von 1 : 1 bis 1 : 2,5 bei einem pH-Wert von 5,0 bis 10,0 und bei einer Temperatur von weniger als 80 °C entsteht und dessen N-Methylolgruppen zu mindestens 30 % mit einem gesättigten aliphatischen Alkohol mit 1 bis 4 C-Atomen verethert sind

b) eine, gegebenenfalls teilweise oder vollständig neutralisierte, Säure S).

2. Wäßrige Lösung nach Patentanspruch 1, dadurch gekennzeichnet, daß sie pro Mol aus DCDA stammenden Einheiten in Komponente a) 0,05/n bis 0,3/n, vorzugsweise 0,1/n bis 0,2/n Mol der Säure S), ggf. in teilweise oder vollständig neutralisierter Form, enthält, wobei n die Wertigkeit der Säure S) ist.

3. Wäßrige Lösung nach Patentanspruch 1 oder 2, dadurch gekennzeichnet, daß in Komponente a) das zahlenmäßige Verhältnis von aus DCDA stammenden Struktureinheiten zu $N-CH_2-O$-Einheiten im Bereich von 1 : 1,15 bis 1 : 1,8 liegt.

4. Wäßrige Lösung nach einem oder mehreren der Patentansprüche 1 bis 3, dadurch gekennzeichnet, daß die Säure S) Amidosulfonsäure ist.

5. Wäßrige Lösung nach einem oder mehreren der Patentansprüche 1 bis 4, dadurch gekennzeichnet, daß die $N-CH_2-O$-Gruppen mit Methylgruppen verethert sind.

6. Wäßrige Lösung nach einem oder mehreren der Patentansprüche 1 bis 5, dadurch gekennzeichnet, daß die Säure S) teilweise oder vollständig als Ammoniumsalz vorliegt.

7. Wäßrige Lösung nach einem oder mehreren der Patentansprüche 1 bis 6, dadurch gekennzeichnet, daß die Lösung zusätzlich ein Ammoniumphosphat enthält.

8. Wäßrige Lösung nach einem oder mehreren der Patentansprüche 1 bis 7, dadurch gekennzeichnet, daß sie zusätzlich ein Mittel enthält, das Formaldehyd abfängt.

9. Wäßrige Lösung nach einem oder mehreren der Patentansprüche 1 bis 8, dadurch gekennzeichnet, daß sie zusätzlich Borsäure und/oder ein Salz der Borsäure enthält.

10. Wäßrige Lösung nach Patentanspruch 9, dadurch gekennzeichnet, daß sie 1,5 bis 11, vorzugsweise 4 bis 8 Gew.% Borverbindung, berechnet als $B_2O_3$, enthält, bezogen auf das Gesamtgewicht der Lösung.

11. Wäßrige Lösung nach einem oder mehreren der Patentansprüche 1 bis 10, dadurch gekennzeichnet, daß die Säure S nicht eine Phosphonsäure der Formel $R-P(O)(OH)_2$ ist und daß die Lösung noch zusätzlich eine Phosphonsäure der Formel $R - P(O)(OH)_2$ enthält, wobei R ein Alkylrest mit 1 bis 4 Kohlenstoff-Atomen ist, wobei die Phosphonsäure in freier Form oder in teilweise oder vollständig neutralisierter Form vorliegen kann.

12. Wäßrige Lösung nach Patentanspruch 11, dadurch gekennzeichnet, daß die Phosphonsäure Methanphosphonsäure ist.

13. Wäßrige Lösung nach Patentanspruch 11 oder 12, dadurch gekennzeichnet, daß sie die Phosphonsäure in einer Menge von 0,5 bis 3 Gew.% enthält.

14. Verfahren zur Herstellung einer Lösung nach einem oder mehreren der Ansprüche 1 bis 13, dadurch gekennzeichnet, daß man DCDA mit Formaldehyd im Molverhältnis von 1 : 1 bis 1 : 2,5 bei einer Temperatur von weniger als 80 °C und bei einem pH-Wert von 5,0 bis 10,0 in einem gesättigten aliphatischen Alkohol mit 1 bis 4 C-Atomen als Lösungsmittel miteinander umsetzt, der Lösung nach beendeter Umsetzung eine Säure S) hinzufügt, die Lösung so lange erwärmt, bis mindestens 30 % aller $N-CH_2-O$-Gruppen verethert sind, die Säure S) teilweise oder vollständig neutralisiert, mindestens 75 % des Alkohols aus der Lösung entfernt, zum Rückstand Wasser hinzufügt, ggf. den pH-Wert auf einen Wert von 4,5 bis 8,5 einstellt und ggf. ein Formaldehyd abfangendes Mittel und ggf. eine Phosphonsäure der Formel $R - P(O)(OH)_2$ zusetzt, wobei R ein Alkylrest mit 1 bis 4 Kohlenstoffatomen ist.

15. Verfahren nach Patentanspruch 14, dadurch gekennzeichnet, daß pro Mol eingesetztes DCDA 0,05/n bis 0,3/n insbesondere 0,1/n bis 0,2/n Mol an Säure S) hinzugefügt werden, wobei n die Wertigkeit der Säure S) ist.

16. Verfahren nach Patentanspruch 14 oder 15, dadurch gekennzeichnet, daß die Säure S) Amidosulfonsäure ist.

17. Verfahren nach einem oder mehreren der Patentansprüche 14 bis 16, dadurch gekennzeichnet, daß die Säure S) duch Zugabe von Ammoniumcarbonat teilweise oder vollständig neutralisiert wird.

18. Verfahren nach einem oder mehreren der Patentansprüche 14 bis 17, dadurch gekennzeichnet, daß der pH-Wert der wäßrigen Lösung durch Zugabe von Diammoniumhydrogenphosphat eingestellt wird.

19. Verfahren nach einem oder mehreren der Patentansprüche 14 bis 18, dadurch gekennzeichnet, daß gleichzeitig mit der Zugabe von Wasser oder daran anschließend Borsäureanhydrid, Borsäure und/oder ein Salz der Borsäure hinzugefügt wird.

20. Verfahren nach einem oder mehreren der Patentansprüche 14 bis 19, dadurch gekennzeichnet, daß der als Lösungsmittel verwendete Alkohol Methanol ist.

21. Verfahren nach einem oder mehreren der Patentansprüche 14 bis 20, dadurch gekennzeichnet, daß DCDA mit Formaldehyd im Molverhältnis von 1 : 1,15 bis 1 : 1,8 umgesetzt wird.

22. Verfahren nach einem oder mehreren der Patentansprüche 14 bis 21, dadurch gekennzeichnet, daß die Lösung nach dem Hinzufügen von Wasser zum Rückstand einer Wärmebehandlung während einer Zeit von 5 bis 60 Minuten bei einer Temperatur im Bereich von 40 bis 95 $^{\circ}$C unterworfen wird, wobei eine Phosphonsäure der Formel R - $P(O)(OH)_2$ vor dieser Wärmebehandlung zugesetzt werden kann und wobei R für einen Alkylrest mit 1 bis 4 Kohlenstoffatomen steht.

23. Verwendung einer Lösung nach einem oder mehreren der Patentansprüche 1 bis 13, ggf. nach Verdünnung, zur Behandlung von Fasermaterialien, insbesondere Textilmaterialien.

24. Verwendung einer Lösung nach Patentanspruch 23, dadurch gekennzeichnet, daß die Lösung vor der Anwendung mit einer wäßrigen Lösung L), welche Phosphorsäure (Lösung L 1)) oder Borsäure (Lösung L 2)) enthält, vereinigt wird.

25. Verwendung einer Lösung nach Patentanspruch 24, dadurch gekennzeichnet, daß eine Lösung L 1) verwendet wird, die Phosphorsäure und zusätzlich ein Produkt enthält, das durch Umsetzung von DCDA mit Formaldehyd im Molverhältnis von 1 : 0,4 bis 1 : 2,5 in saurer wäßriger Lösung und bei einer Temperatur von weniger als 100 $^{\circ}$C entsteht, oder ein Produkt, das aus diesem Umsetzungsprodukt in wäßriger phosphorsaurer Lösung gebildet wird.

26. Verwendung einer Lösung nach einem oder mehreren der Patentansprüche 23 bis 25, dadurch gekennzeichnet, daß Harnstoff, ein substituierter Harnstoff, ein mehrwertiger Alkohol oder ein Polyglykol der Lösung in einer solchen Menge hinzugefügt wird, daß die für die Ausrüstung der Fasermaterialien verwendete Ausrüstungsflotte 5 bis 30 Gew.% des hinzugefügten Produkts enthält

27. Verwendung einer Lösung nach einem oder mehreren der Patentansprüche 23 bis 26, dadurch gekennzeichnet, daß durch die Behandlung Fasermaterialien, welche aus Cellulosefasern bestehen oder Cellulosefasern enthalten, flammhemmend ausgerüstet werden.